# EUROPÄISCHE PATENTSCHRIFT

(11) **EP 3 868 964 B1**
(45) Veröffentlichungstag und Bekanntmachung des Hinweises auf die Patenterteilung: **02.11.2022**
(21) Anmeldenummer: 20198684.1
(22) Anmeldetag: 28.09.2020
(51) Int. Cl.: E03C 1/04, F16K 31/00, G05D 23/02, G05D 23/13, F16K 11/00

(54) **SANITÄRARMATUR MIT EINEM NICHT-AXIALEN THERMOSTATMISCHER**
SANITARY FITTING WITH A NON-AXIAL THERMOSTATIC MIXER
ROBINETTERIE SANITAIRE DOTÉE D'UN MITIGEUR THERMOSTATIQUE NON AXIAL

(30) Priorität: 24.02.2020 DE 102020104759
(43) Veröffentlichungstag der Anmeldung: 25.08.2021
(73) Patentinhaber: Grohe AG, 58653 Hemer (DE)
(72) Erfinder: KOSTORZ, Ole Benedikt, 58706 Menden (DE)

(56) Entgegenhaltungen:
- DE-A1-102009 007 538
- DE-T2- 68 914 166
- DE-T5-112016 003 514
- US-A1- 2018 059 693
- US-B2- 10 025 326

## Beschreibung

Die vorliegende Erfindung betrifft eine Sanitärarmatur, durch die Kaltwasser und Heißwasser zu einem Mischwasser mit einer gewünschten Mischwassertemperatur mischbar ist. Mittels derartiger Sanitärarmaturen ist das Mischwasser insbesondere an Waschbecken, Spülbecken, Duschen und/oder Badewannen bereitstellbar.

Sanitärarmaturen können beispielsweise nach Art eines Einhebelmischers ausgebildet sein, die einen (einzigen) Bedienhebel zur Einstellung der Mischwassertemperatur und einer Abgabemenge des Mischwassers aufweisen. Die Temperatur des dem Einhebelmischer zugeführten Heißwassers ist häufig nicht konstant, sondern kann, beispielsweise im Tagesverlauf, Schwankungen unterliegen. Hierdurch schwankt selbst bei identischer Stellung des Bedienhebels die Mischwassertemperatur des durch ein Mischventil des Einhebelmischers hergestellten Mischwassers. Ein Benutzer der Sanitärarmatur kann sich somit nicht darauf verlassen, bei einer bestimmten Stellung des Bedienhebels Mischwasser mit der gewünschten Mischwassertemperatur zu zapfen, sondern muss die Mischwassertemperatur über den Bedienhebel regelmäßig nachjustieren. Zudem ist nachteilig, dass eine Gefahr von Verbrühungen besteht, wenn dem Einhebelmischer Heißwasser mit besonders hohen Heißwassertemperaturen zugeführt wird. Auch normal temperiertes Heißwasser kann bereits zu Verbrühungen führen. Zudem können Druckschwankungen des Kaltwassers oder ein Ausfall des zugeführten Kaltwassers zu Gefahren führen.

Es ist daher bereits bekannt, einem Warmwassereinlass des Mischventils der Sanitärarmatur einen Thermostatmischer vorzuordnen, durch den dem Warmwassereinlass des Mischventils Warmwasser mit einer vorgegebenen Warmwassertemperatur zuführbar ist. Hierzu mischt der Thermostatmischer das Heißwasser vorab mit Kaltwasser, um eine konstante Warmwassertemperatur zu erhalten. Das derart vorgemischte Warmwasser wird anschließend dem Warmwassereinlass des Mischventils zugeführt. Die Druckschrift DE102009007538A1 zeigt eine solche Sanitärarmatur. Nachteilig ist, dass derartige Thermostatmischer einen großen Bauraum beanspruchen, der in Armaturengehäusen der Sanitärarmaturen häufig nicht zur Verfügung steht oder der eine Vergrößerung der Armaturengehäuse der Sanitärarmaturen erfordert.

Aufgabe der Erfindung ist es daher, die mit Bezug auf den Stand der Technik geschilderten Probleme zumindest teilweise zu lösen und insbesondere eine Sanitärarmatur anzugeben, dessen Thermostatmischer einen geringeren Bauraumbedarf aufweist.

Diese Aufgabe wird gelöst mit einer Sanitärarmatur gemäß den Merkmalen des unabhängigen Patentanspruchs. Weitere vorteilhafte Ausgestaltungen der Erfindung sind in den abhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitärarmatur bei, die zumindest die folgenden Komponenten aufweist:
- ein Armaturengehäuse;
- ein Mischventil zum Mischen von Kaltwasser und Warmwasser zu einem Mischwasser; und
- ein Thermostatmischer zum Mischen von Kaltwasser und Heißwasser zu dem Warmwasser, der ein Dehnstoffelement und einen durch das Dehnstoffelement betätigbaren Schieber zum Einstellen eines Mischungsverhältnisses zwischen dem Kaltwasser und dem Heißwasser umfasst, wobei das Dehnstoffelement und der Schieber nicht koaxial zueinander angeordnet sind.

Die Sanitärarmatur kann insbesondere nach Art eines Einhebelmischers ausgebildet sein und/oder dient insbesondere der Bereitstellung eines Mischwassers an einem Waschbecken, Spülbecken, Dusche und/oder Badewanne. Weiterhin weist die Sanitärarmatur ein Armaturengehäuse auf. Das Armaturengehäuse kann zumindest teilweise aus Kunststoff und/oder Metall, wie zum Beispiel Messing oder eine Zinklegierung, bestehen. Weiterhin ist das Armaturengehäuse insbesondere an einem Träger, wie zum Beispiel einer (Küchen-)Arbeitsplatte, befestigbar.

Zudem weist die Sanitärarmatur ein Mischventil zum Mischen von Kaltwasser und Warmwasser zu einem Mischwasser auf. Das Mischventil kann beispielsweise nach Art einer Einhebelmischkartusche ausgebildet sein und/oder zumindest teilweise in dem Armaturengehäuse der Sanitärarmatur angeordnet sein. Das Mischventil kann ein Mischgehäuse aufweisen, das insbesondere zumindest teilweise aus Kunststoff besteht und/oder zumindest teilweise zylinderförmig ausgebildet ist. In dem Mischgehäuse ist zumindest teilweise ein Stellhebel beweglich befestigt, welcher der Betätigung des Mischventils dient. Der Stellhebel ist hierzu insbesondere mit einem Bedienhebel der Sanitärarmatur, beispielsweise mittels einer Schraubverbindung oder Steckverbindung, verbunden. Der Stellhebel kann, insbesondere zur Einstellung einer Mischwassertemperatur, um eine Drehachse drehbar und/oder, insbesondere zur Einstellung einer Abgabemenge des Mischwassers, um eine (insbesondere orthogonal zu der Drehachse verlaufenden) Schwenkachse schwenkbar sein. Weiterhin kann das Mischventil eine feststehende Steuerscheibe und eine bewegliche Steuerscheibe aufweisen. Die feststehende Steuerscheibe und die bewegliche Steuerscheibe können jeweils insbesondere flach bzw. scheibenförmig ausgebildet sein. Weiterhin können die feststehende Steuerscheibe und die bewegliche Steuerscheibe zumindest teilweise aus Keramik bestehen. Die feststehende Steuerscheibe ist insbesondere fest, d. h. insbesondere gegenüber dem Gehäuse nicht verschieblich oder nicht drehbar, in dem Gehäuse angeordnet, wohingegen die bewegliche Steuerscheibe insbesondere durch den Stellhebel auf der feststehenden Steuerscheibe bewegbar (insbesondere gegenüber dem Gehäuse drehbar) ist.

Weiterhin weist die Sanitärarmatur einen Thermostatmischer zum Mischen von Kaltwasser und Heißwasser zu dem Warmwasser auf. Das Kaltwasser ist dem Thermostatmischer, beispielsweise von einem öffentlichen Wasserversorgungsnetz, insbesondere über eine Kaltwasserleitung und/oder das Heißwasser dem Thermostatmischer, beispielsweise von dem öffentlichen Wasserversorgungsnetz und/oder einem Heißwasserbereiter, insbesondere über eine Heißwasserleitung zuführbar. Bei der Kaltwasserleitung und/oder der Heißwasserleitung kann es sich beispielsweise um eine Rohrleitung oder einen flexiblen Schlauch handeln. Eine Kaltwassertemperatur des Kaltwassers beträgt insbesondere maximal 25 °C (Celsius), bevorzugt 1 °C bis 25 °C, besonders bevorzugt 5 °C bis 20 °C und/oder eine Heißwassertemperatur des Heißwassers insbesondere maximal 100 °C, bevorzugt 25 °C bis 100 °C, besonders bevorzugt 55 °C bis 65 °C. Das Kaltwasser und Heißwasser sind insbesondere in einem Warmwassermischraum des Thermostatmischers zu dem Warmwasser mischbar. Der Thermostatmischer umfasst zudem ein Dehnstoffelement und einen durch das Dehnstoffelement betätigbaren Schieber. Das Dehnstoffelement erstreckt sich insbesondere entlang einer ersten Längsachse und/oder ist zumindest teilweise rotationssymmetrisch um die zumindest eine erste Längsachse ausgebildet. Weiterhin kann das Dehnstoffelement zumindest teilweise aus einem Wachs bestehen und/oder sich insbesondere in Abhängigkeit von der Mischwassertemperatur des Mischwassers, insbesondere parallel zu der ersten Längsachse, ausdehnen. Der Schieber kann zumindest teilweise aus Metall oder Kunststoff bestehen. Weiterhin kann der Schieber insbesondere zumindest teilweise zylinderförmig oder rohrförmig ausgebildet sein. Zudem kann der Schieber sich entlang einer zweiten Längsachse erstrecken. Der Schieber ist derart mit dem Dehnstoffelement verbunden, dass eine Längenänderung des Dehnstoffelements zu einer Betätigung bzw. einer Bewegung des Schiebers, insbesondere in Richtung seiner zweiten Längsachse, führt. Durch die Betätigung bzw. Bewegung des Schiebers ist ein Mischungsverhältnis zwischen dem Kaltwasser und dem Heißwasser veränderbar, wodurch eine Warmwassertemperatur des gemischten Warmwassers durch den Thermostatmischer beeinflussbar ist. Hierzu kann der Schieber insbesondere eine Spaltbreite eines Kaltwasserregelspalts und/oder eine Spaltbreite eines Heißwasserregelspalts des Thermostatmischers verändern. Das Kaltwasser ist dem Warmwassermischraum des Thermostatmischers insbesondere über den Kaltwasserregelspalt und/oder das Heißwasser dem Warmwassermischraum des Thermostatmischers insbesondere über den Heißwasserregelspalt zuführbar. Der Kaltwasserregelspalt und/oder der Heißwasserregelspalt sind insbesondere zwischen dem Schieber und einem Gehäuse des Thermostatmischers oder einem Kartuschenadapter des Mischventils ausgebildet. Die Betätigung des Schiebers führt insbesondere zu einer gleichzeitigen Änderung der Spaltbreite des Kaltwasserregelspalts und des Heißwasserregelspalts. Eine Vergrößerung der Spaltbreite des Kaltwasserregelspalts führt dabei insbesondere zu einer Verkleinerung des Heißwasserregelspalts. Entsprechend führt eine Verkleinerung der Spaltbreite des Kaltwasserregelspalts insbesondere zu einer Vergrößerung des Heißwasserregelspalts. Weiterhin führt eine Ausdehnung bzw. eine Verlängerung des Dehnstoffelements insbesondere zu einer Vergrößerung der Spaltbreite des Kaltwasserregelspalts und einer Verkleinerung der Spaltbreite des Heißwasserregelspalts. Entsprechend führt eine Schrumpfung bzw. eine Verkürzung des Dehnstoffelements insbesondere zu einer Verkleinerung der Spaltbreite des Kaltwasserregelspalts und einer Vergrößerung der Spaltbreite des Heißwasserregelspalts. Eine steigende Mischwassertemperatur des Mischwassers kann somit zu einer sinkenden Warmwassertemperatur des Warmwassers führen. Weiterhin kann somit eine sinkende Mischwassertemperatur des Mischwassers zu einer steigenden Warmwassertemperatur des Warmwassers führen. Übersteigt die Mischwassertemperatur des Mischwassers beispielsweise einen Grenzwert, kann der Schieber den Heißwasserregelspalt insbesondere vollständig verschließen. Die Warmwassertemperatur des Warmwassers entspricht dann der Kaltwassertemperatur des Kaltwassers. Mit anderen Worten besteht das Warmwasser in diesem Fall ausschließlich aus dem Kaltwasser. Die Warmwassertemperatur des Warmwassers kann beispielsweise 1 °C bis 60 °C betragen. Das durch den Thermostatmischer gemischte Warmwasser ist anschließend dem Mischventil zuführbar, durch das das Warmwasser mit (weiterem) Kaltwasser zu dem Mischwasser mischbar ist. Das Dehnstoffelement und der Schieber sind nicht koaxial zueinander angeordnet. Dies kann insbesondere bedeuten, dass die erste Längsachse des Dehnstoffelements und die zweite Längsachse des Schiebers nicht miteinander fluchten. Weiterhin kann dies bedeuten, dass das Dehnstoffelement und der Schieber nicht axial angeordnet bzw. in Richtung ihrer Längsachsen nicht hintereinander angeordnet sind. Dies führt zu einem geringeren Bauraumbedarf des Thermostatmischers. Hierdurch kann der Thermostatmischer in dem Armaturengehäuse beispielsweise in einen zylinderförmigen Freiraum und/oder unterhalb des Mischventils angeordnet werden.

Eine erste Längsachse des Dehnstoffelements und eine zweite Längsachse des Schiebers können parallel zueinander verlaufen. Dies kann insbesondere bedeuten, dass zwischen der ersten Längsachse des Dehnstoffelements und der zweiten Längsachse des Schiebers ein Abstand ausgebildet ist, der sich insbesondere orthogonal zu der ersten Längsachse und der zweiten Längsachse bemisst. Hierdurch sind das Dehnstoffelement und der Schieber insbesondere nebeneinander angeordnet.

Der Schieber kann durch das Dehnstoffelement über ein Verbindungselement betätigbar sein. Das Verbindungselement kann zumindest teilweise aus Metall oder Kunststoff bestehen. Weiterhin kann das Verbindungselement flach und/oder nach Art einer Scheibe ausgebildet sein. Zudem kann das Verbindungselement zumindest teilweise S-förmig ausgebildet sein. Der Schieber kann durch das Verbindungselement insbesondere derart mit dem Dehnstoffelement gekoppelt sein, dass eine Längenänderung des Dehnstoffelements zur Betätigung bzw. Verstellung des Schiebers führt.

Das Verbindungselement kann durch das Dehnstoffelement gegen eine Feder verstellbar sein. Die Feder kann beispielsweise nach Art einer Schraubenfeder ausgebildet sein. Die Feder kann insbesondere eine Gegenkraft erzeugen, durch die das Verbindungselement und somit der an dem Verbindungselement befestigte Schieber bei einem Schrumpfen des Dehnstoffelements rückstellbar sind.

Die Feder und der Schieber können insbesondere nicht koaxial zueinander angeordnet sein. Insbesondere kann die Feder eine dritte Längsachse aufweisen, die parallel zu der ersten Längsachse des Dehnstoffelements und/oder der zweiten Längsachse des Schiebers verläuft.

Der Schieber und das Verbindungselement können über ein Gewinde miteinander verbunden sein. Hierdurch ist eine Stellung des Schiebers relativ zu dem Verbindungselement und/oder dem Dehnstoffelement justierbar.

Das Verbindungselement kann in eine erste Nut des Dehnstoffelements und in eine zweite Nut des Schiebers eingreifen. Die erste Nut des Dehnstoffelements verläuft insbesondere um die erste Längsachse des Dehnstoffelements und/oder die zweite Nut des Schiebers um die zweite Längsachse des Schiebers.

Das Dehnstoffelement kann in einem ersten Hohlraum eines Gehäuses des Thermostatmischers und der Schieber in einem zweiten Hohlraum des Gehäuses des Thermostatmischers angeordnet sein. Mit anderen Worten können das Dehnstoffelement und der Schieber räumlich getrennt in dem Gehäuse des Thermostatmischers angeordnet sein.

Der Schieber kann einen Heißwasserkanal für das Heißwasser aufweisen. Hierzu kann der Schieber insbesondere zumindest teilweise rohrförmig ausgebildet sein. Somit kann das Heißwasser durch den Schieber und über den Heißwasserregelspalt dem Warmwassermischraum des Thermostatmischers zuführbar sein.

Das Dehnstoffelement kann zumindest teilweise von dem Mischwasser umströmbar sein. Hierzu kann das Dehnstoffelement zumindest teilweise einen Mischwasserkanal begrenzen, durch den das durch das Mischventil gemischte Mischwasser der Auslauföffnung des Auslaufs zuführbar ist.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine erste Ausführungsvariante einer Sanitärarmatur;
- Fig. 2:: die erste Ausführungsvariante der Sanitärarmatur in einem Längsschnitt;
- Fig. 3:: die erste Ausführungsvariante der Sanitärarmatur in einem Querschnitt;
- Fig. 4:: zweite Ausführungsvariante einer Sanitärarmatur in einem Längsschnitt; und
- Fig. 5:: die zweite Ausführungsvariante der Sanitärarmatur in einem Querschnitt.

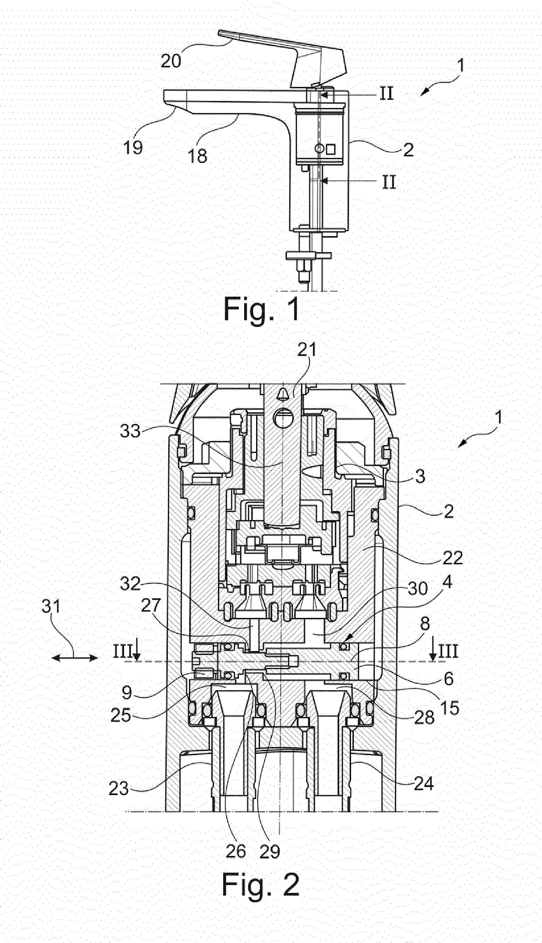

Die Fig. 1 zeigt eine erste Ausführungsvariante einer Sanitärarmatur 1 in einer Seitenansicht. Die Sanitärarmatur 1 umfasst ein Armaturengehäuse 2 mit einem Auslauf 18 und einer Auslauföffnung 19. Weiterhin umfasst die Sanitärarmatur 1 einen Bedienhebel 20, der zur Steuerung einer Abgabemenge eines Mischwassers um eine horizontale Achse schwenkbar und zur Einstellung einer Mischwassertemperatur des Mischwassers um eine vertikale Achse drehbar ist. Hierzu ist der Bedienhebel 20 mit einem in der Fig. 2 gezeigten Stellhebel 21 eines Mischventils 3 verbunden, das hier nach Art einer Einhebelmischkartusche ausgebildet ist.

Die Fig. 2 zeigt die erste Ausführungsvariante der Sanitärarmatur 1 in einem Längsschnitt entlang der in der Fig. 1 gezeigten Schnittlinie II-II. In dem Armaturengehäuse 2 der Sanitärarmatur 1 ist ein Thermostatmischer 4 zum Mischen von Kaltwasser und Heißwasser zu einem Warmwasser angeordnet. Hierzu ist dem Thermostatmischer 4 Heißwasser über eine Heißwasserleitung 23 und Kaltwasser über eine Kaltwasserleitung 24 zuführbar. Die Heißwasserleitung 23 und die Kaltwasserleitung 24 münden in einen Kartuschenadapter 22, der das Mischventil 3 in dem Armaturengehäuse 2 der Sanitärarmatur 1 trägt und als Gehäuse 15 für den Thermostatmischer 4 dient. Das Heißwasser ist über einen Heißwasserkanal 25 des Gehäuses 15 und einen Heißwasserregelspalt 26 des Thermostatmischers 4 einem Warmwassermischraum 27 des Thermostatmischers 4 zuführbar. Das Kaltwasser ist über einen ersten Kaltwasserkanal 28 des Gehäuses 15 und einen Kaltwasserregelspalt 29 des Thermostatmischers 4 dem Warmwassermischraum 27 des Thermostatmischers 4 zuführbar. Zudem ist das Kaltwasser über den ersten Kaltwasserkanal 28 und einen zweiten Kaltwasserkanal 30 des Gehäuses 15 dem Mischventil 3 zuführbar.

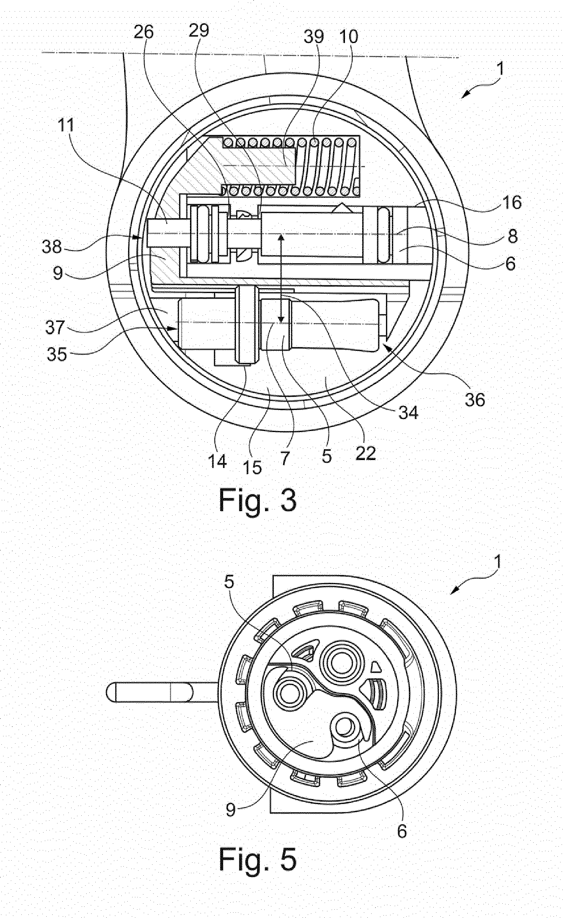

Der Thermostatmischer 4 umfasst einen Schieber 6, mittels dem ein Mischungsverhältnis zwischen dem in dem Warmwassermischraum 27 gemischten Kaltwasser und Heißwasser einstellbar ist. Hierzu ist der Schieber 6 durch ein in der Fig. 3 gezeigtes Dehnstoffelement 5 betätigbar. Das Dehnstoffelement 5 weist eine in der Fig. 3 gezeigte erste Längsachse 7 auf, in dessen Richtung sich das Dehnstoffelement 5 in Abhängigkeit von der Mischwassertemperatur des Mischwassers ausdehnen kann. Die daraus folgende Längenänderung des Dehnstoffelements 5 ist über ein Verbindungselement 9 auf den Schieber 6 übertragbar, sodass der Schieber 6 durch das Dehnstoffelement 5 parallel zu seiner zweiten Längsachse 8 in eine Bewegungsrichtung 31 verstellbar ist. Die zweite Längsachse 8 des Schiebers 6 erstreckt sich hier orthogonal zu einer Gehäuselängsachse 33 des Gehäuses 15 bzw. des Armaturengehäuses 2. Die Bewegung des Schiebers 6 in der Bewegungsrichtung 31 bewirkt eine Änderung einer Spaltbreite des Heißwasserregelspalts 26 und des Kaltwasserregelspalts 29, sodass sich das Mischungsverhältnis zwischen dem Kaltwasser und Heißwasser in dem Warmwassermischraum und somit eine Warmwassertemperatur des gemischten Warmwassers ändert. Eine Verlängerung des Dehnstoffelements 5 in Richtung seiner ersten Längsachse 7 führt zu einer Verringerung der Spaltbreite des Heißwasserregelspalts 26 und einer Vergrößerung der Spaltbreite des Kaltwasserregelspalts 29, sodass die Warmwassertemperatur des Warmwassers sinkt. Eine Verkürzung des Dehnstoffelements 5 in Richtung seiner ersten Längsachse 7 führt zu einer Vergrößerung der Spaltbreite des Heißwasserregelspalts 26 und einer Verringerung der Spaltbreite des Kaltwasserregelspalts 29, sodass die Warmwassertemperatur des Warmwassers steigt. Die Spaltbreite des Heißwasserregelspalts 26 und des Kaltwasserregelspalts 29 bemisst sich hier parallel zu der zweiten Längsachse 8 des Schiebers 6 bzw. parallel zu der Bewegungsrichtung 31 des Schiebers 6. Der Schieber 6 ist durch das Dehnstoffelement 5 soweit verstellbar, dass der Heißwasserregelspalt 26 oder der Kaltwasserregelspalt 29 geschlossen sind. Die Warmwassertemperatur des Warmwassers entspricht dann einer Heißwassertemperatur des Heißwassers oder einer Kaltwassertemperatur des Kaltwassers.

Das in dem Warmwassermischraum 27 des Thermostatmischers 4 gemischte Warmwasser ist über einen Warmwasserkanal 32 des Gehäuses 15 dem Mischventil 3 zuführbar, sodass anschließend das Kaltwasser und das Warmwasser durch das Mischventil 3 zu dem Mischwasser mit der gewünschten Mischwassertemperatur mischbar sind. Das Mischwasser ist von dem Mischventil 3 über einen in der Fig. 3 teilweise zu erkennenden Mischwasserkanal 37 der in der Fig. 1 gezeigten Auslauföffnung 19 des Auslaufs 18 zuführbar.

Die Fig. 3 zeigt die erste Ausführungsvariante der Sanitärarmatur 1 in einem Querschnitt entlang der in der Fig. 2 gezeigten Schnittlinie III-III. Zu erkennen ist hier, dass das Dehnstoffelement 5 und der Schieber 6 nicht koaxial zueinander angeordnet sind. Stattdessen verlaufen die erste Längsachse 7 des Dehnstoffelements 5 und die zweite Längsachse 8 des Schiebers 6 parallel und mit einem Abstand 34 zueinander. Das Dehnstoffelement 5 und der Schieber 6 sind somit nebeneinander angeordnet. Zudem ist das Dehnstoffelement 5 in einem ersten Hohlraum 14 des Gehäuses 15 bzw. des Kartuschenadapters 22 und der Schieber 6 in einem zweiten Hohlraum 16 des Gehäuses 15 bzw. des Kartuschenadapters 22 angeordnet. Ein erstes längsseitiges Ende 35 des Dehnstoffelements 5 begrenzt den Mischwasserkanal 37, sodass das Dehnstoffelement 5 durch das in der Fig. 2 gezeigte Mischventil 3 gemischte Mischwasser zumindest teilweise umströmbar ist. Hierdurch kann sich das Dehnstoffelement 5 im Betrieb der Sanitärarmatur 1 in Abhängigkeit der Mischwassertemperatur des Mischwassers in dem Mischwasserkanal 37 entlang seiner ersten Längsachse 7 ausdehnen. Das Dehnstoffelement 5 kontaktiert an seinem zweiten längsseitigen Ende 36 das Verbindungselement 9, sodass eine Längenänderung des Dehnstoffelements 5 über das Verbindungselement 9 auf den Schieber 6 übertragbar ist. Hierzu ist der Schieber 6 an einem dritten längsseitigen Ende 38 über ein Gewinde 11 an dem Verbindungselement 9 befestigt. Das Gewinde 11 ermöglicht eine Justierung des Schiebers 6. Bei einer Ausdehnung des Dehnstoffelements 5 entlang seiner ersten Längsachse 7 verringert der Schieber 6 die Spaltbreite des Heißwasserregelspalts 26 und vergrößert die Spaltbreite des Kaltwasserregelspalts 29. Auf einer dem Dehnstoffelement 5 gegenüberliegenden Seite des Schiebers 6 steht das Verbindungselement 9 mit einer Feder 10 in Wirkverbindung. Die Feder 10 ist hier nach Art einer Schraubenfeder ausgebildet und weist eine dritte Längsachse 39 auf, die parallel und mit Abstand zu der ersten Längsachse 7 des Dehnstoffelements 5 und der zweiten Längsachse 8 des Schiebers 6 verläuft. Somit ist die Feder 10 ebenfalls nicht koaxial zu dem Dehnstoffelement 5 und/oder zu dem Schieber 6 angeordnet. Die Feder 10 drückt das Verbindungselement 9 gegen das zweite längsseitige Ende 36 des Dehnstoffelements 5, sodass das Verbindungselement 9 und der Schieber 6 bei einer Verkürzung des Dehnstoffelements 5 parallel zu seiner ersten Längsachse 7 an dem zweiten längsseitigen Ende 36 des Dehnstoffelements 5 gehalten wird. Bei einer Verkürzung des Dehnstoffelements 5 entlang seiner ersten Längsachse 7 vergrößert der Schieber 6 die Spaltbreite des Heißwasserregelspalts 26 und verringert die Spaltbreite des Kaltwasserregelspalts 29. Das Verbindungselement 9 erstreckt sich von der Feder 10 bis zu dem zweiten längsseitigen Ende 36 des Dehnstoffelements 5 (im Wesentlichen) S-förmig.

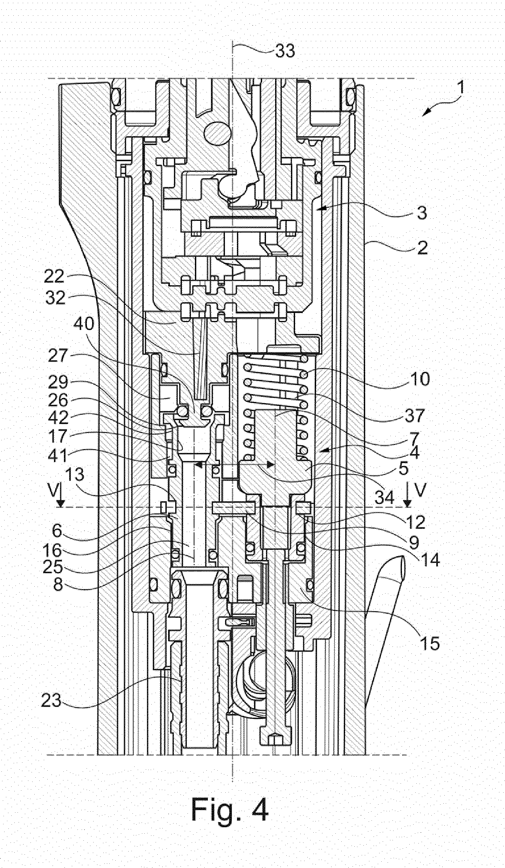

Die Fig. 4 zeigt eine zweite Ausführungsvariante der Sanitärarmatur 1 in einem Längsschnitt. Die Sanitärarmatur 1 weist ein Armaturengehäuse 2 auf, das wie das in der Fig. 1 gezeigte Armaturengehäuse 2 der ersten Ausführungsvariante der Sanitärarmatur 1 ausgebildet sein kann. Insbesondere kann das Armaturengehäuse 2 ebenfalls einen Auslauf 18 mit einer Auslauföffnung 19 aufweisen. Weiterhin zeigt die Fig. 4 die zweite Ausführungsvariante der Sanitärarmatur 1 im Bereich der in der Fig. 1 gezeigten Schnittlinie II-II der ersten Ausführungsvariante der Sanitärarmatur 1. Die zweite Ausführungsvariante der Sanitärarmatur 1 weist ebenfalls ein Mischventil 3 und einen Thermostatmischer 4 auf. Der Thermostatmischer 4 umfasst ein Dehnstoffelement 5, das über ein Verbindungselement 9 mit einem Schieber 6 verbunden ist. Hierzu greift das Verbindungselement 9 in eine erste Nut 12 des Dehnstoffelements 5 und in eine zweite Nut 13 des Schiebers 6 ein. Das Dehnstoffelement 5 und der Schieber 6 sind nicht koaxial zueinander angeordnet, sondern eine erste Längsachse 7 des Dehnstoffelements 5 und eine zweite Längsachse 8 des Schiebers 6 verlaufen parallel und mit einem Abstand 34 zueinander. Weiterhin verlaufen die erste Längsachse 7 und die zweite Längsachse 8 parallel zu einer Gehäuselängsachse 33 eines Gehäuses 15 des Thermostatmischers 4 bzw. des Armaturengehäuses 2 der Sanitärarmatur 1. Das Dehnstoffelement 5 ist in einem ersten Hohlraum 14 und der Schieber 6 in einem zweiten Hohlraum 16 des Gehäuses 15 angeordnet. In das Gehäuse 15 mündet einer Heißwasserleitung 23, über die dem Thermostatmischer 4 Heißwasser zuführbar ist. Durch den Schieber 6 erstreckt sich ein Heißwasserkanal 25, sodass der Schieber 6 rohrförmig ausgebildet ist. Das Heißwasser ist über den Heißwasserkanal 25 und durch einen Heißwasserregelspalt 26 in einen Warmwassermischraum 27 des Thermostatmischers 4 führbar. Der Heißwasserregelspalt 26 ist zwischen einer Innenfläche 17 des Schiebers 6 und einem Zapfen 40 eines Kartuschenadapters 22 des Mischventils 3 ausgebildet. Weiterhin mündet in das Gehäuse 15 eine hier nicht sichtbare Kaltwasserleitung 24. Über hier ebenfalls nicht sichtbare Kaltwasserleitungen in dem Gehäuse 15 ist das Kaltwasser dem Mischventil 3 und einem um den Schieber 6 verlaufenden Ringspalt 41 zuführbar. Das Kaltwasser ist dem Warmwassermischraum 27 über einen Kaltwasserregelspalt 29 zuführbar. Der Kaltwasserregelspalt 29 ist zwischen einer Außenfläche 42 des Schiebers 6 und dem Gehäuse 15 des Thermostatmischers 4 ausgebildet.

Das Dehnstoffelement 5 begrenzt einen Mischwasserkanal 37, über den ein durch das Mischventil 3 gemischtes Mischwasser einer hier nicht gezeigten Auslauföffnung 19 zuführbar ist. Das Dehnstoffelement 5 dehnt sich daher im Betrieb der Sanitärarmatur 1 in Abhängigkeit einer Mischwassertemperatur des Mischwassers aus und verstellt dabei den Schieber 6 über das Verbindungselement 9 parallel zu der zweiten Längsachse 8 des Schiebers 6, sodass sich eine Spaltbreite des Heißwasserregelspalts 26 und eine Spaltbreite des Kaltwasserregelspalts 29 ändern. Steigt die Mischwassertemperatur des Mischwassers, verstellt das Dehnstoffelement 5 den Schieber 6 derart, dass die Spaltbreite des Heißwasserregelspalts 26 verringert und die Spaltbreite des Kaltwasserregelspalts 29 vergrößert wird. Sinkt die Mischwassertemperatur des Mischwassers, verstellt das Dehnstoffelement 5 den Schieber 6 derart, dass die Spaltbreite des Heißwasserregelspalts 26 vergrößert und die Spaltbreite des Kaltwasserregelspalts 29 verringert wird. Hierzu ist das Dehnstoffelement 5 durch eine Feder 10, die hier nach Art einer Schraubenfeder ausgebildet und in dem Mischwasserkanal 37 angeordnet ist, vorgespannt. Das durch den Thermostatmischer 4 in dem Warmwassermischraum 27 gemischte Warmwasser ist dem Mischventil 3 über einen hier nur teilweise sichtbaren Warmwasserkanal 32 zuführbar und zusammen mit dem Kaltwasser zu dem Mischwasser mischbar.

Die Fig. 5 zeigt die zweite Ausführungsvariante der Sanitärarmatur 1 in einem Querschnitt entlang der in der Fig. 4 gezeigten Schnittlinie V-V. Zu erkennen ist hier insbesondere das Verbindungselement 9, dass das Dehnstoffelement 5 mit dem Schieber 6 verbindet. Das Verbindungselement 9 ist ebenfalls (im Wesentlichen) S-förmig ausgebildet.

Durch die vorliegende Erfindung weist der Thermostatmischer der Sanitärarmatur einen geringeren Bauraumbedarf auf.

### Bezugszeichenliste

- 1: Sanitärarmatur
- 2: Armaturengehäuse
- 3: Mischventil
- 4: Thermostatmischer
- 5: Dehnstoffelement
- 6: Schieber
- 7: erste Längsachse
- 8: zweite Längsachse
- 9: Verbindungselement
- 10: Feder
- 11: Gewinde
- 12: erste Nut
- 13: zweite Nut
- 14: erster Hohlraum
- 15: Gehäuse
- 16: zweiter Hohlraum
- 17: Innenfläche
- 18: Auslauf
- 19: Auslauföffnung
- 20: Bedienhebel
- 21: Stellhebel
- 22: Kartuschenadapter
- 23: Heißwasserleitung
- 24: Kaltwasserleitung
- 25: Heißwasserkanal
- 26: Heißwasserregelspalt
- 27: Warmwassermischraum
- 28: erster Kaltwasserkanal
- 29: Kaltwasserregelspalt
- 30: zweiter Kaltwasserkanal
- 31: Bewegungsrichtung
- 32: Warmwasserkanal
- 33: Gehäuselängsachse
- 34: Abstand
- 35: erstes längsseitiges Ende
- 36: zweites längsseitiges Ende
- 37: Mischwasserkanal
- 38: drittes längsseitiges Ende
- 39: dritte Längsachse
- 40: Zapfen
- 41: Ringspalt
- 42: Außenfläche

## Patentansprüche

1. Sanitärarmatur (1), zumindest aufweisend:
- ein Armaturengehäuse (2);
- ein Mischventil (3) zum Mischen von Kaltwasser und Warmwasser zu einem Mischwasser; und
- ein Thermostatmischer (4) zum Mischen von Kaltwasser und Heißwasser zu dem Warmwasser, der ein Dehnstoffelement (5) und einen durch das Dehnstoffelement (5) betätigbaren Schieber (6) zum Einstellen eines Mischungsverhältnisses zwischen dem Kaltwasser und dem Heißwasser umfasst, wobei das Dehnstoffelement (5) und der Schieber (6) nicht koaxial zueinander angeordnet sind.

2. Sanitärarmatur (1) nach Patentanspruch 1, wobei eine erste Längsachse (7) des Dehnstoffelements (5) und eine zweite Längsachse (8) des Schiebers (6) parallel zueinander verlaufen.

3. Sanitärarmatur (1) nach einem der vorhergehenden Patentansprüche, wobei der Schieber (6) durch das Dehnstoffelement (5) über ein Verbindungselement (9) betätigbar ist.

4. Sanitärarmatur (1) nach Patentanspruch 3, wobei das Verbindungselement (9) durch das Dehnstoffelement (5) gegen eine Feder (10) verstellbar ist.

5. Sanitärarmatur (1) nach Patentanspruch 4, wobei die Feder (10) und der Schieber (6) nicht koaxial zueinander angeordnet sind.

6. Sanitärarmatur (1) nach einem der Patentansprüche 3 bis 5, wobei der Schieber (6) und das Verbindungselement (9) über ein Gewinde (11) miteinander verbunden sind.

7. Sanitärarmatur (1) nach einem der Patentansprüche 3 bis 6, wobei das Verbindungselement (9) in eine erste Nut (12) des Dehnstoffelements (5) und in eine zweite Nut (13) des Schiebers (6) eingreift.

8. Sanitärarmatur (1) nach einem der vorhergehenden Patentansprüche, wobei das Dehnstoffelement (5) in einem ersten Hohlraum (14) eines Gehäuses (15) des Thermostatmischers (4) und der Schieber (6) in einem zweiten Hohlraum (16) des Gehäuses (15) des Thermostatmischers (4) angeordnet ist.

9. Sanitärarmatur (1) nach einem der vorhergehenden Patentansprüche, wobei der Schieber (6) einen Heißwasserkanal (25) für das Heißwasser aufweist.

10. Sanitärarmatur (1) nach einem der vorhergehenden Patentansprüche, wobei das Dehnstoffelement (5) zumindest teilweise von dem Mischwasser umströmbar ist.

## Claims

1. A sanitary fitting (1), comprising at least:
- one fitting housing (2);
- one mixing valve (3) for mixing cold water and hot water into mixed water; and
- a thermostatic mixer (4) for mixing cold water and hot water into hot water, comprising an expansion element (5) and a slide (6) actuatable by the expansion element (5) for adjusting a mixing ratio between the cold water and the hot water, wherein the expansion element (5) and the slide (6) are arranged non-coaxially with each other.

2. The sanitary fitting (1) according to claim 1, wherein a first longitudinal axis (7) of the expansion element (5) and a second longitudinal axis (8) of the slide (6) run parallel to each other.

3. The sanitary fitting (1) according to any one of the preceding claims, wherein the slide (6) can be actuated by the expansion element (5) via a connecting element (9) .

4. The sanitary fitting (1) according to claim 3, wherein the connecting element (9) can be adjusted by the expansion element (5) against a spring (10).

5. The sanitary fitting (1) according to claim 4, wherein the spring (10) and the slide (6) are arranged non-coaxially with each other.

6. The sanitary fitting (1) according to any one of claims 3 to 5, wherein the slide (6) and the connecting element (9) are connected to each other via a thread (11).

7. The sanitary fitting (1) according to any one of claims 3 to 6, wherein the connecting element (9) engages in a first groove (12) of the expansion element (5) and in a second groove (13) of the slide (6).

8. The sanitary fitting (1) according to any one of the preceding claims, wherein the expansion element (5) is arranged in a first cavity (14) of a housing (15) of the thermostatic mixer (4) and the slide (6) is arranged in a second cavity (16) of the housing (15) of the thermostatic mixer (4).

9. The sanitary fitting (1) according to any one of the preceding claims, wherein the slide (6) has a hot water channel (25) for the hot water.

10. The sanitary fitting (1) according to any one of the preceding claims, wherein the mixed water can flow at least around parts of the expansion element (5).

## Revendications

1. Robinetterie sanitaire (1), comportant au moins :
- un corps de robinet (2) ;
- un mélangeur (3), destiné à mélanger de l'eau froide et de l'eau chaude en une eau mitigée ; et
- un mitigeur thermostatique (4), destiné à mélanger de l'eau froide et de l'eau très chaude à l'eau chaude, qui comprend un élément en matière dilatable (5) et un curseur (6) actionnable par l'élément en matière dilatable (5), pour le réglage d'un rapport de mélange entre l'eau froide et l'eau très chaude, l'élément en matière dilatable (5) et le curseur (6) n'étant pas placés de manière coaxiale l'un par rapport à l'autre.

2. Robinetterie sanitaire (1) selon la revendication 1, un premier axe longitudinal (7) de l'élément en matière dilatable (5) et un deuxième axe longitudinal (8) du curseur (6) s'écoulant à la parallèle l'un de l'autre.

3. Robinetterie sanitaire (1) selon l'une quelconque des revendications précédentes, le curseur (6) étant actionnable par l'élément en matière dilatable (5) par l'intermédiaire d'un élément de liaison (9).

4. Robinetterie sanitaire (1) selon la revendication 3, l'élément de liaison (9) étant réglable par l'élément en matière dilatable (5) à l'encontre d'un ressort (10) .

5. Robinetterie sanitaire (1) selon la revendication 4, le ressort (10) et le curseur (6) n'étant pas placés de manière coaxiale l'un par rapport à l'autre.

6. Robinetterie sanitaire (1) selon l'une quelconque des revendications 3 à 5, le curseur (6) et l'élément de liaison (9) étant reliés l'un à l'autre par l'intermédiaire d'un filetage (11).

7. Robinetterie sanitaire (1) selon l'une quelconque des revendications 3 à 6, l'élément de liaison (9) s'engageant dans une première rainure (12) de l'élément en matière dilatable (5) et dans une deuxième rainure (13) du curseur (6).

8. Robinetterie sanitaire (1) selon l'une quelconque des revendications précédentes, l'élément en matière dilatable (5) étant placé dans une première cavité (14) d'un corps (15) du mitigeur thermostatique (4) et le curseur (6) étant placé dans une deuxième cavité (16) du corps (15) du mitigeur thermostatique (4).

9. Robinetterie sanitaire (1) selon l'une quelconque des revendications précédentes, le curseur (6) comportant une canalisation d'eau très chaude (25) pour l'eau très chaude.

10. Robinetterie sanitaire (1) selon l'une quelconque des revendications précédentes, l'élément en matière dilatable (5) étant susceptible d'être entouré au moins en partie par le flux d'eau mitigée.
